# FASCICULE DE BREVET EUROPEEN

(11) **EP 4 533 984 B1**
(45) Date de publication et mention de la délivrance du brevet: **04.03.2026**
(21) Numéro de dépôt: 24204418.8
(22) Date de dépôt: 03.10.2024
(51) Int. Cl.: A47J 37/06

(54) **APPAREIL DE CUISSON ÉLECTRIQUE**
ELEKTRISCHES KOCHGERÄT
ELECTRIC COOKING APPLIANCE

(30) Priorité: 05.10.2023 FR 2310663
(43) Date de publication de la demande: 09.04.2025
(73) Titulaire: SEB S.A., 69130 Ecully (FR)
(72) Inventeur: DUSSART, Marie, 69134 ECULLY CEDEX (FR); PETITALLOT, Johann, 69134 ECULLY CEDEX (FR)
(74) Mandataire: SEB Développement

(56) Documents cités:
- WO-A1-2015/081549
- US-A1- 2019 328 179
- US-A1- 2023 112 715

## Description

### Domaine technique

La présente invention concerne de manière générale un appareil de cuisson électrique, pour la cuisson de produits alimentaires selon au moins un mode de cuisson à air chaud.

### Etat de la technique

Il est connu de l'art antérieur d'utiliser un appareil de cuisson électrique configuré pour cuire des aliments, et comprenant :
- un boîtier comprenant un logement de réception ;
- un récipient de cuisson configuré pour être logé au moins en partie à l'intérieur du logement de réception, le récipient de cuisson comportant un fond de récipient et des parois périphériques s'étendant à partir du fond de récipient et délimitant avec le fond de récipient un volume de cuisson ;
- une plaque de cuisson configurée pour être supportée par le récipient de cuisson et pour supporter les aliments à cuire ; et
- un système de chauffage à air chaud configuré pour chauffer et cuire les aliments présents à l'intérieur du logement de réception selon un mode de cuisson à air chaud.

Un tel appareil de cuisson électrique permet à l'utilisateur de réaliser la cuisson de produits alimentaires à l'intérieur du récipient de cuisson, et plus particulièrement sur la plaque de cuisson lorsque la plaque de cuisson est supportée par le récipient de cuisson.

En outre, il est connu du document WO2015081549 A1 un système de positionnement de la plaque de cuisson configuré pour positionné la plaque de cuisson selon deux positions à des hauteurs différentes dans le récipient de cuisson.

Ce type d'appareil de cuisson électrique est particulièrement performant car il permet à l'utilisateur de réaliser une cuisson de produits alimentaires à l'intérieur du récipient de cuisson de manière extrêmement simple ; il suffit en effet de disposer les produits alimentaires sur la plaque de cuisson et de lancer le fonctionnement de l'appareil de cuisson électrique.. En outre, un tel appareil permet de positionner la plaque de cuisson à des hauteurs différentes. Néanmoins, le système de positionnement n'est pas très robuste.

Le document US2019328179 A1 divulgue un appareil de cuisson présentant une plaque de cuisson occupant des hauteurs différentes dans la cuve de cuisson selon l'orientation donnée à la plaque de cuisson.

### Résumé de l'invention

Le problème technique à la base de l'invention consiste donc à fournir un appareil de cuisson électrique, conformé pour la cuisson de produits alimentaires selon au moins un mode de cuisson à air chaud et qui soit modulable, tout en étant de structure simple, compacte et économique.

A cet effet, la présente invention concerne un appareil de cuisson électrique selon la revendication 1.

Une telle configuration de l'invention permet de positionner la plaque de cuisson dans différentes positions par rapport au fond de récipient, et donc de modifier la distance entre les aliments positionnés sur la plaque de cuisson et le système de chauffage lorsque la plaque de cuisson repose sur le récipient de cuisson. Ces dispositions permettent d'optimiser les performances de cuisson, et par exemple d'obtenir des aliments plus ou moins grillés ou grillés, en fonction de la position de cuisson occupée par la plaque de cuisson.

En outre, il est par exemple plus facile d'attraper des filets de saumon lorsqu'ils sont cuits sur la plaque de cuisson occupant la première position de cuisson, plutôt que cuit sur la plaque de cuisson occupant la deuxième position de cuisson.

L'appareil de cuisson électrique peut en outre présenter une ou plusieurs des caractéristiques suivantes, qui peuvent être prises seules ou en combinaison.

Selon un mode de réalisation de l'invention, la plaque de cuisson est configurée pour être orientée, par rapport au récipient de cuisson, selon une première orientation lorsque la plaque de cuisson occupe la première position de cuisson, et pour être orientée, par rapport au récipient de cuisson, selon une deuxième orientation lorsque la plaque de cuisson occupe la deuxième position de cuisson, la première orientation étant différente de la deuxième orientation. Une telle configuration de l'invention permet avantageusement de faciliter la mise en position de la plaque de cuisson dans l'une ou l'autre de la première position de cuisson et de la deuxième position de cuisson en fonction du choix de l'utilisateur.

Selon un mode de réalisation de l'invention, la plaque de cuisson et la partie d'appui sont monobloc.

Selon un mode de réalisation de l'invention, la plaque de cuisson est configurée pour être disposée dans le volume de cuisson au moins lorsqu'elle occupe la deuxième position de cuisson, et par exemple aussi bien lorsqu'elle occupe la première position de cuisson que lorsqu'elle occupe la deuxième position de cuisson.

Selon un mode de réalisation de l'invention, le système de chauffage à air chaud comporte un ventilateur configuré pour générer un flux d'air dans le volume de cuisson, et une unité d'entraînement configurée pour entrainer en rotation le ventilateur.

Selon un mode de réalisation de l'invention, le système de chauffage à air chaud est prévu dans une partie supérieure du boîtier.

Selon un mode de réalisation de l'invention, le ventilateur est configuré pour s'étendre sensiblement en vis-à-vis de la plaque de cuisson.

Selon un mode de réalisation de l'invention, le système de chauffage à air chaud comporte en outre un organe de chauffage, tel qu'une résistance électrique chauffante, configuré pour chauffer le flux d'air généré par le ventilateur.

Selon un mode de réalisation de l'invention, le récipient de cuisson et la plaque de cuisson sont configurés pour coopérer par complémentarité de forme.

Selon un mode de réalisation de l'invention, le récipient de cuisson comporte une section transversale de forme sensiblement rectangulaire ou carré.

Selon un mode de réalisation de l'invention, le fond de récipient s'étend sensiblement horizontalement lorsque le récipient de cuisson est logé dans le logement de réception et que le boîtier repose sur une surface horizontale.

Selon un mode de réalisation de l'invention, le premier plan de cuisson et le deuxième plan de cuisson sont sensiblement parallèles, et sont configurés pour s'étendre sensiblement horizontalement lorsque le boîtier repose sur une surface horizontale.

Une telle configuration de l'invention permet avantageusement une bonne répartition des aliments sur la plaque de cuisson lorsque la plaque de cuisson occupe l'une ou l'autre des première et deuxième positions de cuisson et lorsque le boîtier inférieur repose sur une surface horizontale.

Selon un mode de réalisation de l'invention, le récipient de cuisson comporte une ouverture d'accès délimitée par un bord périphérique supérieur du récipient de cuisson, l'ouverture d'accès étant configurée pour permettre la mise en place et le retrait de la plaque de cuisson dans et hors du volume de cuisson, et notamment pour permettre la mise en place de la plaque de cuisson dans la première position de cuisson par au moins un mouvement de translation vertical, c'est-à-dire sensiblement perpendiculaire au fond de récipient. Une telle configuration de l'invention et de l'ouverture d'accès permet une mise en place et un retrait des aliments sur la plaque de cuisson qui soit simplifiée.

Selon un mode de réalisation de l'invention, la plaque de cuisson comporte une face inférieure configurée pour être orientée vers le fond de récipient et une face supérieure sur laquelle sont destinés à être disposés des aliments à cuire, les organes de support étant configurés pour coopérer avec une portion périphérique de la face inférieure de la plaque de cuisson lorsque la plaque de cuisson occupe la première position de cuisson, ladite portion périphérique formant la partie d'appui.

Selon un mode de réalisation de l'invention, chaque organe de support est configuré pour faire saillie à l'intérieur du volume de cuisson.

Selon un mode de réalisation de l'invention, chaque organe de support est configuré pour s'étendre sensiblement verticalement lorsque le boîtier repose sur une surface horizontale.

Selon un mode de réalisation de l'invention, chaque organe de support est un plot de positionnement.

Selon un mode de réalisation de l'invention, les organes de support sont configurés pour autoriser le passage de la plaque de cuisson depuis la première position vers la deuxième position par une inclinaison de la plaque de cuisson autour d'un axe d'inclinaison. Une telle configuration de l'invention permet de faire passer la plaque de cuisson depuis la première position de cuisson vers la deuxième position de cuisson sans requérir une quelconque modification mécanique de la plaque de cuisson.

Selon un mode de réalisation de l'invention, l'axe d'inclinaison est un axe sensiblement horizontal passant par deux des parois périphériques opposées du récipient de cuisson qui ne comportent pas d'organe de support.

Selon un mode de réalisation de l'invention, la surface de support inférieure s'étend sur le pourtour interne du récipient de cuisson, et sur chacune des parois périphériques, de telle sorte que la surface de support inférieure définit une bordure périphérique interne dans le volume de cuisson.

Selon un mode de réalisation de l'invention, les organes de support sont prévus sur au moins deux des parois périphériques du récipient de cuisson.

Selon un mode de réalisation de l'invention, les organes de support sont répartis sur deux parois périphérique du récipient de cuisson qui sont en vis-à-vis l'une de l'autre.

Selon un mode de réalisation de l'invention, les évidements de positionnement sont asymétriques par rapport à un plan médian de la plaque de cuisson qui est perpendiculaire à un plan d'extension de la plaque de cuisson.

Selon un mode de réalisation de l'invention, le plan médian permet de définir une symétrie du contour de la plaque de cuisson (hors évidements de positionnement), une telle configuration de l'invention permet une coopération entre la plaque de cuisson et une partie supérieure du récipient de cuisson selon au moins deux orientations différentes de la plaque de cuisson, les deux orientations étant décalées angulairement, par exemple d'un angle de 90° ou de 180°, autour d'un axe de rotation qui est transversal au premier plan de cuisson. Une telle configuration de l'invention permet avantageusement d'obtenir une plaque de cuisson configurée pour passer de la position de cuisson haute à la position de cuisson basse par un simple mouvement de translation, et d'obtenir une plaque de cuisson qui repose sur les organes de support lorsque la plaque de cuisson est positionnée dans le volume de cuisson après une rotation de 180° autour de l'axe de rotation qui est transversal au premier plan de cuisson.

Selon un mode de réalisation de l'invention, chacun des organes de support comporte deux portions de guidage latérales sensiblement parallèles entre elles et configurées pour permettre l'indexage et le guidage de la plaque de cuisson lors de son déplacement vers la deuxième position de cuisson.

Selon un mode de réalisation de l'invention, les deux portions de guidage latérales sont configurées pour s'étendre sensiblement verticalement lorsque le boîtier repose sur une surface horizontale.

Selon un mode de réalisation de l'invention, la portion inférieure s'étend depuis le fond de récipient jusqu'à la surface de support inférieure. Avantageusement, cela permet d'éviter que les aliments présents sur la plaque de cuisson ne baignent dans les jus de cuisson lorsque la plaque de cuisson est positionnée dans la deuxième position de cuisson.

Selon un mode de réalisation de l'invention, le récipient de cuisson est amovible par rapport au boîtier.

Selon un mode de réalisation de l'invention, le récipient de cuisson comporte en outre une poignée de préhension configurée pour permettre la mise en place et le retrait du récipient de cuisson dans et en dehors du logement de réception, par exemple par un mouvement de translation. De façon avantageuse, l'appareil de cuisson électrique est configuré de telle sorte que le mouvement de translation est sensiblement horizontal lorsque le boîtier repose sur une surface horizontale.

Selon un mode de réalisation de l'invention, la poignée de préhension est prévue sur une face extérieure de l'une des parois périphériques.

Selon un mode de réalisation de l'invention, la poignée de préhension s'étend sensiblement verticalement.

Selon un mode de réalisation de l'invention, la plaque de cuisson est configurée pour être logée dans le récipient de cuisson aussi bien lorsqu'elle occupe la première position de cuisson que la deuxième position de cuisson.

Selon un mode de réalisation de l'invention, le boîtier comporte un couvercle configuré pour occuper alternativement une position de fermeture dans laquelle le couvercle empêche l'accès au logement de réception, et une position d'ouverture dans laquelle le couvercle autorise l'accès au logement de réception.

Selon un mode de réalisation de l'invention, le couvercle est monté pivotant autour d'un axe de pivotement qui est sensiblement horizontal lorsque le boîtier repose sur une surface horizontale.

Selon un mode de réalisation de l'invention, la plaque de cuisson comporte des moyens de préhension, tels que des doigts de préhension par exemple, lesquels sont configuré pour autoriser la préhension de la plaque de cuisson par l'insertion des doigts de l'utilisateur, lorsque la plaque de cuisson est dans la première position de cuisson ou dans la deuxième position de cuisson.

Selon un mode de réalisation de l'invention, chacun des organes de support comporte deux portions de guidage latérales sensiblement parallèles entre elles et configurées pour permettre l'indexage et le guidage de la plaque de cuisson lors de son déplacement vers la deuxième position de cuisson.

Selon un mode de réalisation de l'invention, la plaque de cuisson est ajourée, de telle sorte que des jus de cuisson produits par des aliments disposés sur la plaque de cuisson peuvent s'écouler par gravité dans une portion inférieure du récipient de cuisson.

L'invention concerne en outre un procédé d'utilisation de l'appareil de cuisson électrique selon la revendication 12.

Le premier effet grillé et le deuxième effet grillé des aliments à cuire diffèrent l'un de l'autre en raison de la distance respective entre la plaque de cuisson et le système de chauffage dans la première position de cuisson et la deuxième position de cuisson.

A défaut de stipulation contraire, le terme « sensiblement » signifie, dans le présent document, « exactement ou à 10% ou à 10° près ».

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
La Figure 1 est une vue en perspective d'un appareil de cuisson électrique selon un premier mode de réalisation de l'invention ;
La Figure 2 est une vue en coupe de côté de l'appareil de cuisson électrique de la figure 1 ;
La Figure 3 est une vue en perspective de dessus d'un récipient de cuisson appartenant à l'appareil de cuisson électrique de la figure 1 ;
La Figure 4 est une vue schématique en coupe du récipient de cuisson de la figure 3 ;
La Figure 5 est une vue schématique en coupe du récipient de cuisson de la figure 3 dans laquelle une plaque de cuisson est positionnée dans une première position de cuisson ;
La Figure 6 est une vue schématique en coupe du récipient de cuisson de la figure 3 dans laquelle la plaque de cuisson est positionnée dans une deuxième position de cuisson ;
La Figure 7 est une vue schématique en coupe du récipient de la figure 3 dans laquelle la plaque de cuisson passe de la première position de cuisson à la deuxième position de cuisson ;
La Figure 8 est une vue en perspective de dessus d'un récipient de cuisson ainsi que d'une plaque de cuisson appartenant à un appareil de cuisson électrique selon un deuxième mode de réalisation de l'invention ;
La Figure 9 est une vue en perspective de dessus du récipient de cuisson et de la plaque de cuisson de la figure 8 dans laquelle la plaque de cuisson occupe respectivement la première position de cuisson et la deuxième position de cuisson ;
La Figure 10 est une vue de dessus du récipient de cuisson de la figure 9 dans laquelle la plaque de cuisson occupe respectivement la première position de cuisson et la deuxième position de cuisson.

### Description détaillée

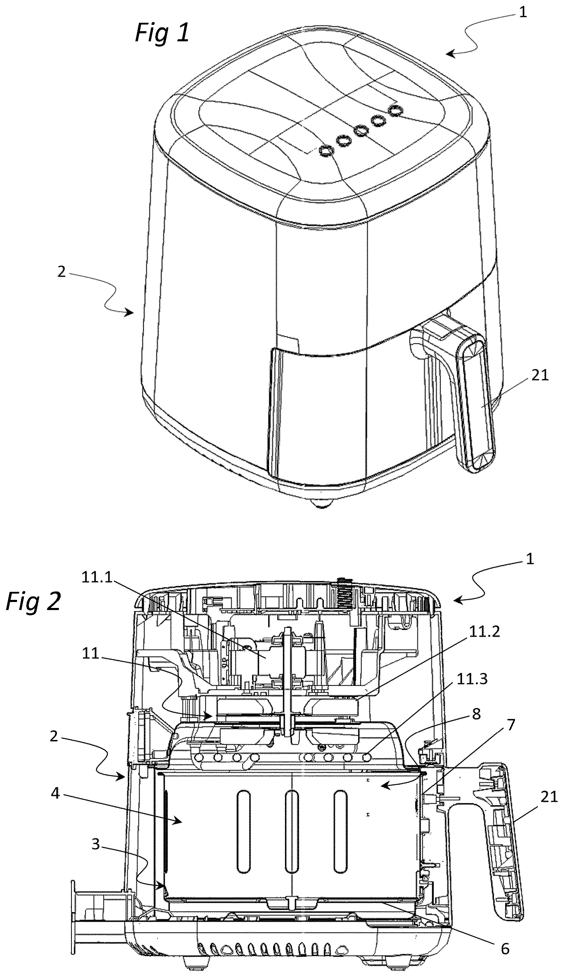

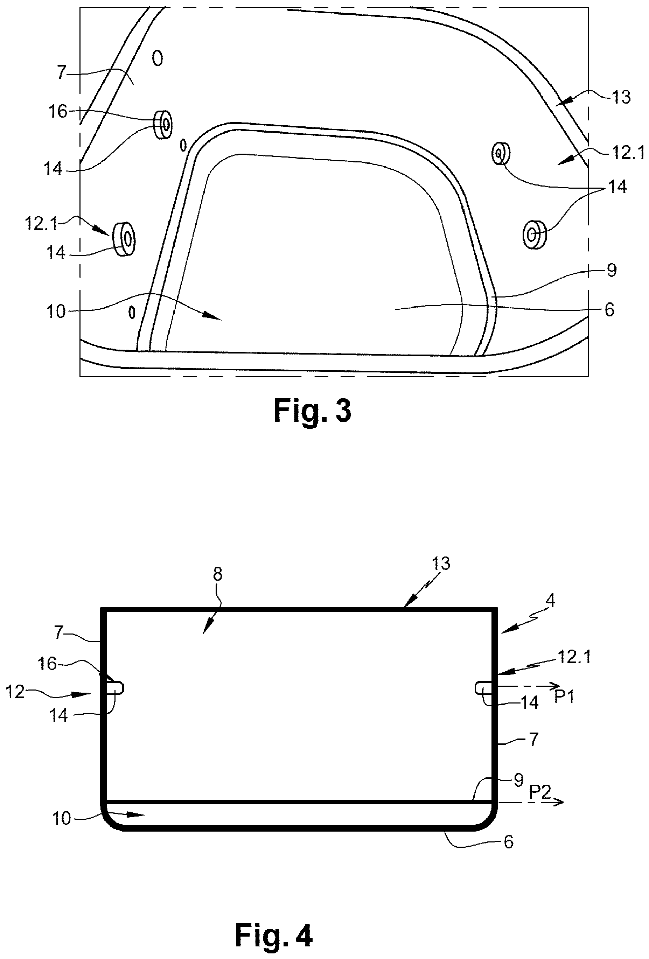

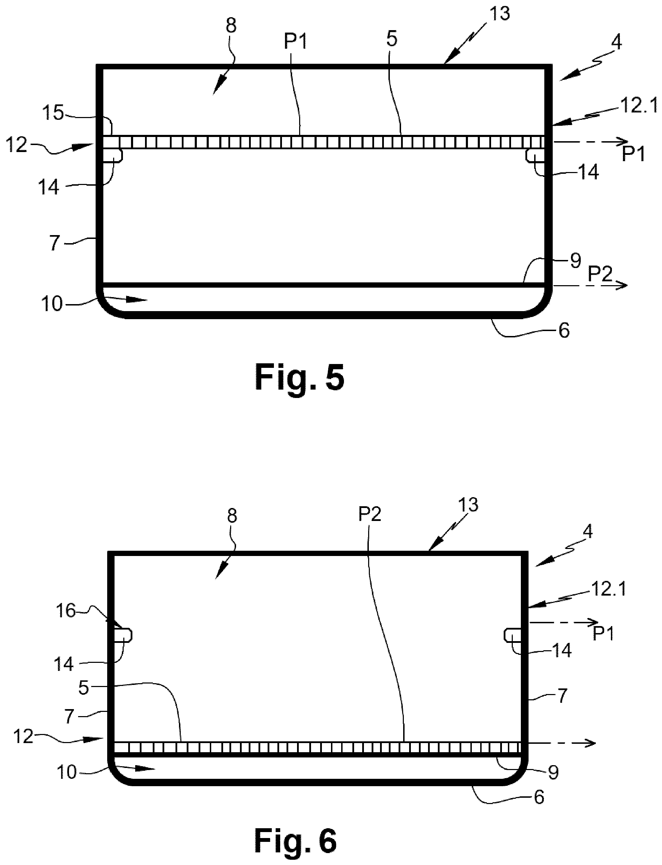

Les figures 1 à 7 représentent tout ou partie d'un appareil de cuisson électrique 1 configuré pour cuire des aliments et selon un premier mode de réalisation de l'invention. L'appareil de cuisson électrique 1 comprend notamment un boîtier 2 délimitant un logement de réception 3, un récipient de cuisson 4 configuré pour être logé à l'intérieur du logement de réception 3, et une plaque de cuisson 5 configurée pour être supportée par le récipient de cuisson 4 et destinée à supporter les aliments à cuire.

Comme représenté sur les figures, le récipient de cuisson 4 comporte un fond de récipient 6 et des parois périphériques 7 qui s'étendent à partir du fond de récipient 6 et qui délimitent, avec le fond de récipient 6, un volume de cuisson 8. Le fond de récipient 6 s'étend sensiblement horizontalement lorsque le récipient de cuisson 4 est logé dans le logement de réception 3 et que le boîtier 2 repose sur une surface horizontale. La plaque de cuisson 5 comporte plus particulièrement une face inférieure configurée pour être orientée vers le fond de récipient 6, et une face supérieure sur laquelle sont destinés à être disposés des aliments à cuire.

Le récipient de cuisson 4 comporte en outre une surface de support inférieure 9 qui s'étend sur le pourtour interne du récipient de cuisson 4 et sur chacune des parois périphériques 7, de telle sorte que la surface de support inférieure 9 définit une bordure périphérique interne dans le volume de cuisson 8. De façon avantageuse, le fond de récipient 6 et la surface de support inférieure 9 définissent une portion inférieure 10 du récipient de cuisson 4 dont la fonction sera détaillée ci-après.

Selon le mode de réalisation représenté sur les figures 1 à 7, le récipient de cuisson 4 présente une section transversale de forme sensiblement rectangulaire, et est configuré pour coopérer par complémentarité de forme avec la plaque de cuisson 5.

Afin de faciliter la manipulation et le nettoyage du récipient de cuisson 4, ce dernier est avantageusement amovible par rapport au boîtier 2.

Selon le mode de réalisation représenté sur les figures 1 à 7, la plaque de cuisson 5 est ajourée et est assimilable à une grille de cuisson. Une telle configuration de la plaque de cuisson 5 permet avantageusement aux jus de cuisson produits par les aliments lors de la cuisson de s'écouler par gravité dans la portion inférieure 10 du récipient de cuisson 4.

L'appareil de cuisson électrique 1 comprend en outre un système de chauffage à air chaud 11 configuré pour chauffer et cuire les aliments présents à l'intérieur du logement de réception 3 selon au moins un mode de cuisson à air chaud. Le système de chauffage à air chaud 11 est avantageusement prévu dans une partie supérieure du boîtier 2, et comporte un ventilateur 11.1 configuré pour générer un flux d'air dans le volume de cuisson 8. Le système de chauffage à air chaud 11 comporte en outre une unité d'entraînement 11.2 configurée pour entrainer en rotation le ventilateur 11.1 lors de l'utilisation de l'appareil de cuisson électrique 1 dans le mode de cuisson à air chaud. Le système de chauffage à air chaud 11 comporte en outre un organe de chauffage 11.3, tel qu'une résistance électrique chauffante, configuré pour chauffer le flux d'air généré par le ventilateur 11.1. Avantageusement, et afin d'obtenir une cuisson à air chaud efficace, le ventilateur 11.1 et l'organe de chauffage 11.3 sont configurés pour s'étendre sensiblement en vis-à-vis de la plaque de cuisson 5, et par conséquent, en vis-à-vis des aliments présents sur la plaque de cuisson 5.

L'appareil de cuisson électrique 1 comporte en outre un système de positionnement 12 configuré pour positionner la plaque de cuisson 5 selon une première position de cuisson dans laquelle la plaque de cuisson 5 s'étend dans un premier plan de cuisson P1 et est située à une première distance du fond de récipient 6, et selon une deuxième position de cuisson dans laquelle la plaque de cuisson 5 s'étend dans un deuxième plan de cuisson P2 et est située à une deuxième distance du fond de récipient 6 qui est inférieure à la première distance. Une telle configuration de l'invention permet de modifier la distance entre les aliments positionnés sur la plaque de cuisson 5 et le système de chauffage à air chaud 11 lorsque la plaque de cuisson 5 repose sur le récipient de cuisson 4. Ceci permet avantageusement d'influer sur le résultat attendu lors de la cuisson, à savoir des aliments plus ou moins grillés ou dorés par exemple. Plus spécifiquement, la cuisson d'aliments disposés sur la plaque de cuisson 5 occupant la première position de cuisson permet d'obtenir un premier effet grillé ou doré, tandis que la cuisson d'aliments sur la plaque de cuisson 5 occupant la deuxième position de cuisson permet d'obtenir un deuxième effet grillé ou doré qui est inférieur au premier effet grillé ou doré.

Plus particulièrement, le premier plan de cuisson P1 et le deuxième plan de cuisson P2 sont sensiblement parallèles et sont configurés pour s'étendre sensiblement horizontalement lorsque le boîtier 2 repose sur une surface horizontale. Une telle configuration de l'invention permet avantageusement une bonne répartition des aliments sur la plaque de cuisson 5 lorsque la plaque de cuisson 5 occupe l'une ou l'autre des première et deuxième positions de cuisson et lorsque le boîtier 2 inférieur repose sur une surface horizontale.

Pour des raisons évidentes liées à l'utilisation de l'appareil de cuisson électrique 1, le récipient de cuisson 4 comporte une ouverture d'accès délimitée par un bord périphérique supérieur 13 du récipient de cuisson 4. L'ouverture d'accès est configurée pour permettre la mise en place de la plaque de cuisson 5 dans la première position de cuisson et son retrait par au moins un mouvement de translation vertical ascendant, c'est-à-dire un mouvement qui est sensiblement perpendiculaire au fond de récipient 6. Une telle configuration de l'invention et de l'ouverture d'accès permet une mise en place et un retrait des aliments sur la plaque de cuisson 5 qui soit simplifiée.

Le système de positionnement 12 comporte notamment une partie de support 12.1 disposée dans le récipient de cuisson 4, et une partie d'appui disposée sur la plaque de cuisson 5 et configurée pour être supportée par la partie de support 12.1 lorsque la plaque de cuisson 5 occupe la première position de cuisson.

Selon le premier mode de réalisation de l'invention visible sur les figures 1 à 7, la partie de support 12.1 comporte des organes de support 14 prévus sur le récipient de cuisson 4 et situés dans un même plan d'extension qui est parallèle au fond de récipient 6. Les organes de support 14 sont configurés pour faire saillie à l'intérieur du volume de cuisson 8 et sont assimilables à des plots de positionnement.

Les organes de support 14 sont configurés pour coopérer avec et supporter une portion périphérique 15 de la face inférieure de la plaque de cuisson 5 lorsque la plaque de cuisson 5 occupe la première position de cuisson. Ainsi, selon le premier mode de réalisation de l'invention visible sur les figures 1 à 7, la portion périphérique 15 forme la partie d'appui précitée, et la plaque de cuisson 5 et la partie d'appui sont monobloc.

De façon avantageuse, le récipient de cuisson 4 comporte quatre organes de support 14 répartis sur deux parois périphériques 7 opposées du récipient de cuisson 4 de telle sorte que deux des organes de support 14 sont prévus sur une première paroi périphérique 7 et que les deux autres organes de support 14 sont prévus sur une paroi périphérique 7 en vis-à-vis de la première parois périphérique 7. Chaque organe de support 14 comporte une face de support supérieure 16 configurée pour supporter une portion respective d'une face inférieure de la portion périphérique 15 lorsque la plaque de cuisson 5 occupe la première position de cuisson.

Selon le premier mode de réalisation de l'invention, les organes de support 14 sont configurés pour autoriser le passage de la plaque de cuisson 5 depuis la première position de cuisson vers la deuxième position de cuisson par une inclinaison de la plaque de cuisson 5 autour d'un axe d'inclinaison qui est sensiblement horizontal et passant par deux des parois périphériques 7 opposées du récipient de cuisson 4 qui ne comportent pas d'organe de support 14. Une telle configuration de l'invention permet de déplacer de manière aisée la plaque de cuisson 5 depuis la première position de cuisson vers la deuxième position de cuisson, et ce sans aucune modification mécanique de la plaque de cuisson 5.

Selon le premier mode de réalisation de l'invention, la surface de support inférieure 9 forme en partie le système de positionnement 12, et est configurée pour supporter la plaque de cuisson 5 horizontalement et dans la deuxième position de cuisson.

Un procédé d'utilisation de l'appareil de cuisson électrique 1 selon le premier mode de réalisation de l'invention est décrit ci-après.

Lorsqu'un utilisateur souhaite réaliser la cuisson d'aliment sur la plaque de cuisson 5 occupant la deuxième position de cuisson, et plus particulièrement déplacer la plaque de cuisson 5 de la première position de cuisson à la deuxième position de cuisson, le procédé d'utilisation comprend les étapes suivantes :
- soulèvement de la plaque de cuisson 5 depuis la première position de cuisson et à distance des organes de support 14, par exemple selon un premier mouvement de translation ascendant sensiblement perpendiculaire au premier plan de cuisson P1,
- pivotement de la plaque de cuisson 5 autour d'un premier axe de pivotement sensiblement parallèle au premier plan de cuisson P1 (et donc sensiblement horizontal) dans un premier sens de pivotement et selon un premier angle de pivotement compris entre 10 degrés et 70 degrés, avantageusement entre 20 degrés et 60 degrés, et comme par exemple de 40 degrés,
- déplacement de la plaque de cuisson 5 entre les organes de support 14 et en direction de fond de récipient 6 jusqu'à ce que la plaque de cuisson 5 soit située en dessous des organes de support 14, par exemple selon un deuxième mouvement de translation descendant sensiblement perpendiculaire au premier plan de cuisson P1,
- pivotement de la plaque de cuisson 5 autour d'un deuxième axe de pivotement sensiblement parallèle au premier plan de cuisson P1, dans un deuxième sens de pivotement opposé au premier sens de pivotement et selon un deuxième angle de pivotement sensiblement identique au premier angle de pivotement, de telle sorte que la plaque de cuisson 5 s'étende sensiblement parallèlement au deuxième plan de cuisson P2,
- déplacement de la plaque de cuisson 5 en direction de fond de récipient 6 jusqu'à atteindre la deuxième position de cuisson, par exemple selon un troisième mouvement de translation descendant sensiblement perpendiculaire au deuxième plan de cuisson P2.

Un utilisateur souhaitant déplacer la plaque de cuisson 5 de la deuxième position de cuisson à la première position de cuisson pourrait aisément effectuer les manipulations décrites ci-dessus selon une chronologie inversée.

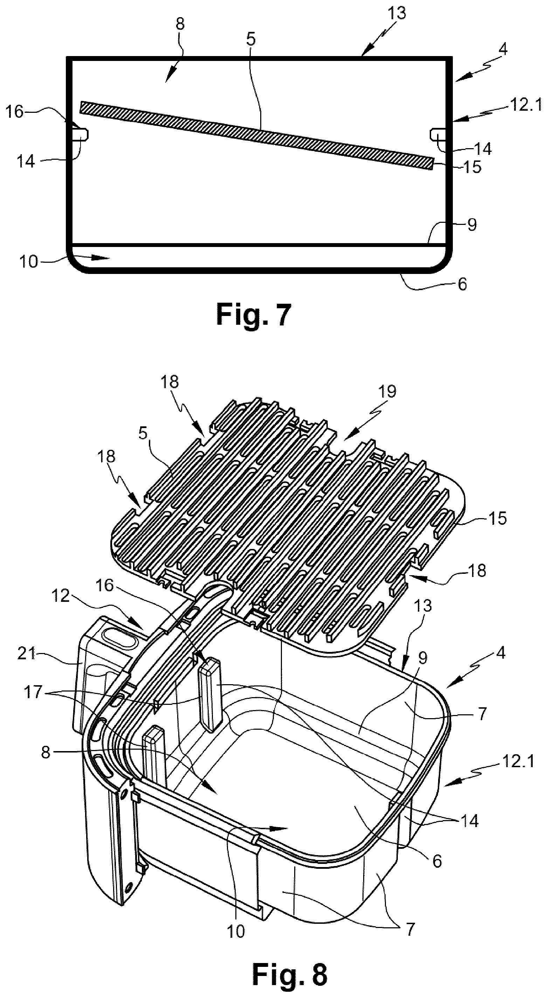

Un deuxième mode de réalisation de l'invention est représenté sur les figures 8 à 10. Le deuxième mode de réalisation de l'invention diffère du premier mode de réalisation essentiellement par le positionnement et la configuration des organes de support 14.

Selon le deuxième mode de réalisation de l'invention, le récipient de cuisson 4 comporte trois organes de support 14, deux des organes de support 14 étant prévus sur une première paroi périphérique 7 tandis que le troisième organe de support 14 est prévu sur une paroi périphérique 7 opposée à la première paroi périphérique 7.

La configuration des organes de support 14 est également différente entre le premier et le deuxième mode de réalisation de l'invention en ce que chacun des organes de support 14 comporte deux portions de guidage latérales 17 sensiblement parallèles entre elles et configurées pour permettre l'indexage et le guidage de la plaque de cuisson 5 lors de son déplacement vers la deuxième position de cuisson. Chaque portion de guidage latérale 17 est configurée pour s'étendre sensiblement verticalement lorsque le boîtier 2 repose sur une surface horizontale.

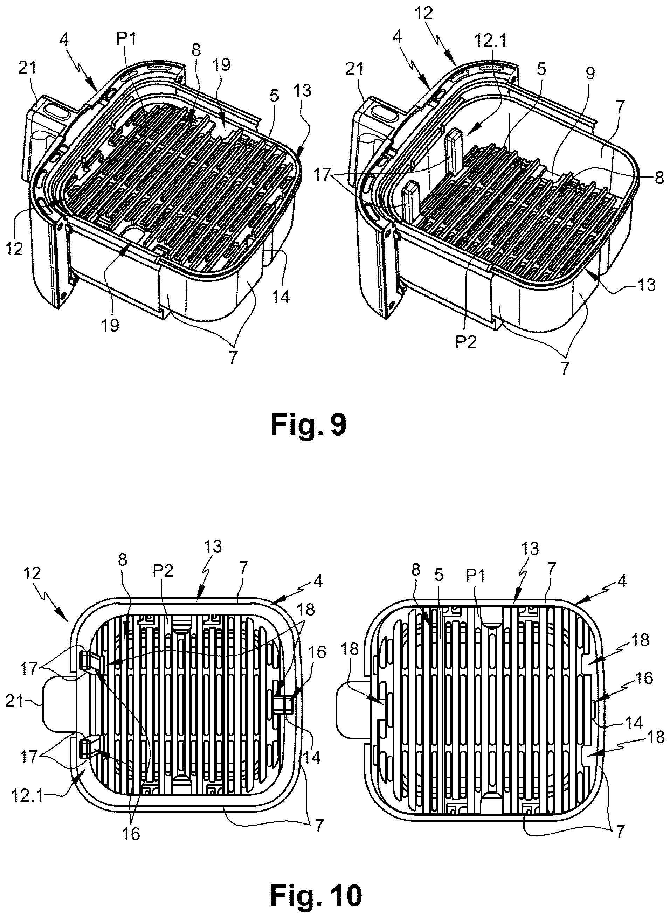

Les figures 9 et 10 présentent chacune la plaque de cuisson 5 respectivement dans la première position de cuisson et dans la deuxième position de cuisson.

Le deuxième mode de réalisation de l'invention diffère par ailleurs du premier mode de réalisation de l'invention en ce que la plaque de cuisson 5 comporte en outre des évidements de positionnement 18, tel que des rainures de positionnement par exemple, prévus sur la plaque de cuisson 5. Le système de positionnement 12 est ainsi configuré de manière à autoriser un déplacement de la plaque de cuisson 5 dans la deuxième position de cuisson par un mouvement de translation sensiblement vertical lorsque chaque organe de support 14 est situé en regard d'un évidement de positionnement respectif.

Les évidements de positionnement 18 de la plaque de cuisson 5 sont asymétriques par rapport à un plan médian de la plaque de cuisson 5 qui est perpendiculaire à un plan d'extension de la plaque de cuisson 5. Le plan médian permet de définir une symétrie du contour de la plaque de cuisson 5 (hors évidements de positionnement 18). Une telle configuration de l'invention permet une coopération entre la plaque de cuisson 5 et une partie supérieure du récipient de cuisson 4 selon au moins deux orientations différentes de la plaque de cuisson 5, et par exemple selon une première orientation, relative au récipient de cuisson 4, lorsque la plaque de cuisson 5 occupe la première position de cuisson, et selon une deuxième orientation, relative au récipient de cuisson 4, lorsque la plaque de cuisson 5 occupe la deuxième position de cuisson, la première orientation et la deuxième orientation étant décalées angulairement, par exemple d'un angle de 90° ou de 180°, autour d'un axe de rotation qui est transversal au premier plan de cuisson P1.

Selon le deuxième mode de réalisation représenté sur les figures 8 à 10, la plaque de cuisson 5 comporte avantageusement des moyens de préhension 19, tels que des ouvertures de préhension par exemple, configurés pour autoriser la préhension de la plaque de cuisson 5 par l'insertion des doigts de l'utilisateur. Les moyens de préhension 19 permettent avantageusement la préhension de la plaque de cuisson 5 par l'utilisateur dans la première position de cuisson et dans la deuxième position de cuisson.

Selon le deuxième mode de réalisation de l'invention, le récipient de cuisson 4 comporte en outre une poignée de préhension 21 configurée pour permettre la mise en place et le retrait du récipient de cuisson 4 dans et en dehors du logement de réception 3, par exemple par un mouvement de translation. La poignée de préhension 21 est prévue sur une face extérieure de l'une des parois périphériques 7 et s'étend sensiblement verticalement. De façon avantageuse, l'appareil de cuisson électrique 1 est configuré de telle sorte que le mouvement de translation est sensiblement horizontal lorsque le boîtier 2 repose sur une surface horizontale.

Un procédé d'utilisation de l'appareil de cuisson électrique 1 selon le deuxième mode de réalisation de l'invention est décrit ci-après.

Lorsqu'un utilisateur souhaite réaliser la cuisson d'aliment sur la plaque de cuisson 5 occupant la deuxième position de cuisson, et plus particulièrement déplacer la plaque de cuisson 5 de la première position de cuisson à la deuxième position de cuisson, le procédé d'utilisation comprend les étapes suivantes :
- soulèvement de la plaque de cuisson 5 depuis la première position de cuisson et à distance des organes de support 14, par exemple selon un premier mouvement de translation ascendant sensiblement perpendiculaire au premier plan de cuisson P1,
- pivotement de la plaque de cuisson 5 autour d'un axe de pivotement qui est sensiblement perpendiculaire au premier plan de cuisson P1, de manière à positionner les évidements de positionnement 18 en regard des organes de support 14, le pivotement de la paque de cuisson 5 étant réalisé avantageusement par une rotation de la plaque de cuisson 5 de 180° autour de l'axe de pivotement,
- déplacement de la plaque de cuisson 5 en direction de fond de récipient 6 jusqu'à atteindre la deuxième position de cuisson, par exemple selon un deuxième mouvement de translation descendant sensiblement perpendiculaire au premier plan de cuisson P1,

Un utilisateur souhaitant passer de la deuxième position de cuisson à la première position de cuisson pourrait aisément effectuer les manipulations décrites ci-dessus selon une chronologie inversée.

Indépendamment des deux modes de réalisation de l'invention décrits ci-dessus, l'appareil de cuisson électrique 1 peut présenter des variantes de réalisations détaillées ci-après. Le boîtier 2 pourrait comporter un couvercle configuré pour occuper alternativement une position de fermeture dans laquelle le couvercle empêche l'accès au logement de réception 3, et une position d'ouverture dans laquelle le couvercle autorise l'accès au logement de réception 3. Dans cette variante de réalisation, le couvercle est monté pivotant autour d'un axe de pivotement qui est sensiblement horizontal lorsque le boîtier 2 repose sur une surface horizontale.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention, tel que défini dans les revendications.

## Revendications

1. Appareil de cuisson électrique (1) configuré pour réaliser la cuisson d'aliments, et comprenant :
- un boîtier (2) comprenant un logement de réception (3) ;
- un récipient de cuisson (4) configuré pour être logé au moins en partie à l'intérieur du logement de réception (3), le récipient de cuisson (4) comportant un fond de récipient (6) et des parois périphériques (7) s'étendant à partir du fond de récipient (6) et délimitant avec le fond de récipient (6) un volume de cuisson (8) ;
- une plaque de cuisson (5) configurée pour être supportée par le récipient de cuisson (4) et pour supporter les aliments à cuire ;
- un système de chauffage à air chaud (11) configuré pour chauffer et cuire les aliments présents à l'intérieur du logement de réception (3) selon au moins un mode de cuisson à air chaud ;
l'appareil de cuisson électrique (1) comportant un système de positionnement (12) configuré pour positionner la plaque de cuisson (5) selon au moins une première position de cuisson dans laquelle la plaque de cuisson (5) s'étend dans un premier plan de cuisson (P1) et est située à une première distance du fond de récipient (6), et selon une deuxième position de cuisson dans laquelle la plaque de cuisson (5) s'étend dans un deuxième plan de cuisson (P2) et est située à une deuxième distance du fond de récipient (6) qui est inférieure à la première distance, le système de positionnement (12) comportant une partie de support (12.1) disposée dans le récipient de cuisson (4) et une partie d'appui disposée sur la plaque de cuisson (5) et configurée pour être supportée par la partie de support (12.1) lorsque la plaque de cuisson (5) occupe la première position de cuisson,
la partie de support (12.1) comportant des organes de support (14) prévus sur le récipient de cuisson (4) et configurés pour coopérer avec et supporter la partie d'appui disposée sur la plaque de cuisson (5) lorsque la plaque de cuisson (5) occupe la première position de cuisson,
la partie d'appui, disposée sur la plaque de cuisson (5), étant configurée pour reposer sur une surface de support inférieure (9) prévue sur le récipient de cuisson (4) lorsque la plaque de cuisson (5) est dans la deuxième position de cuisson, ladite surface de support inférieure (9) formant en partie le système de positionnement (12)
**caractérisé en ce que** le système de positionnement (12) comporte des évidements de positionnement (18) prévus sur la plaque de cuisson (5), le système de positionnement (12) étant configuré de manière à autoriser un déplacement de la plaque de cuisson (5) dans la deuxième position de cuisson, lorsque chaque organe de support (14) est situé en regard d'un évidement de positionnement (18) respectif.

2. Appareil de cuisson selon la revendication 1, dans lequel la plaque de cuisson (5) est configurée pour être orientée, par rapport au récipient de cuisson (4), selon une première orientation relative lorsque la plaque de cuisson (5) occupe la première position de cuisson, et pour être orientée, par rapport au récipient de cuisson (4), selon une deuxième orientation lorsque la plaque de cuisson (5) occupe la deuxième position de cuisson, la première orientation étant différente de la deuxième orientation.

3. Appareil de cuisson selon la revendication 1 ou la revendication 2, dans lequel la plaque de cuisson (5) et la partie d'appui sont monobloc.

4. Appareil de cuisson selon l'une quelconque des revendications 1 à 3, dans lequel le premier plan de cuisson (P1) et le deuxième plan de cuisson (P2) sont sensiblement parallèles, et sont configurés pour s'étendre sensiblement horizontalement lorsque le boîtier (2) repose sur une surface horizontale.

5. Appareil de cuisson selon l'une quelconque des revendications 1 à 4, dans lequel le récipient de cuisson (4) comporte une ouverture d'accès délimitée par un bord périphérique supérieur (13) du récipient de cuisson (4), l'ouverture d'accès étant configurée pour permettre la mise en place et le retrait de la plaque de cuisson (5) dans et hors du volume de cuisson (8).

6. Appareil de cuisson selon l'une quelconque des revendications 1 à 5, dans lequel la plaque de cuisson (5) comporte une face inférieure configurée pour être orientée vers le fond de récipient (6) et une face supérieure sur laquelle sont destinés à être disposés des aliments à cuire, les organes de support (14) étant configurés pour coopérer avec une portion périphérique (15) de la face inférieure de la plaque de cuisson (5) lorsque la plaque de cuisson (5) occupe la première position de cuisson, ladite portion périphérique (15) formant la partie d'appui.

7. Appareil de cuisson selon l'une quelconque des revendications 1 à 6, dans lequel chaque organe de support (14) est configuré pour faire saillie à l'intérieur du volume de cuisson (8).

8. Appareil de cuisson selon l'une quelconque des revendications 1 à 7, dans lequel les organes de support (14) sont prévus sur au moins deux des parois périphériques (7) du récipient de cuisson (4).

9. Appareil de cuisson selon l'une quelconque des revendications 1 à 8, dans lequel les évidements de positionnement (18) sont asymétriques par rapport à un plan médian de la plaque de cuisson (5) qui est perpendiculaire à un plan d'extension de la plaque de cuisson (5).

10. Appareil de cuisson selon l'une quelconque des revendications 1 à 9, dans lequel chacun des organes de support (14) comporte deux portions de guidage latérales (17) sensiblement parallèles entre elles et configurées pour permettre l'indexage et le guidage de la plaque de cuisson (5) lors de son déplacement vers la deuxième position de cuisson.

11. Appareil de cuisson selon l'une quelconque des revendication 1 à 10, dans lequel la plaque de cuisson (5) est ajourée, de telle sorte que des jus de cuisson produits par des aliments disposés sur la plaque de cuisson (5) peuvent s'écouler par gravité dans une portion inférieure (10) du récipient de cuisson (4).

12. Procédé d'utilisation d'un appareil de cuisson électrique (1) selon l'une quelconque des revendications 1 à 11, le procédé d'utilisation comprenant une étape de déplacement de la plaque de cuisson (5) de la première position de cuisson à la deuxième position de cuisson qui comprend au moins les étapes suivantes :
- soulèvement de la plaque de cuisson (5) depuis la première position de cuisson et à distance des organes de support (14),
- pivotement de la plaque de cuisson (5) autour d'un axe de pivotement qui est sensiblement perpendiculaire au premier plan de cuisson (P1), de manière à positionner les évidements de positionnement (18) en regard des organes de support (14),
- déplacement de la plaque de cuisson (5) en direction de fond de récipient (6) jusqu'à atteindre la deuxième position de cuisson.

## Patentansprüche

1. Elektrisches Kochgerät (1), konfiguriert zum Kochen von Lebensmitteln, umfassend:
∘ ein Gehäuse (2), das ein Aufnahmegehäuse (3) umfasst;
∘ einen Kochbehälter (4), der konfiguriert ist, zumindest teilweise innerhalb des Aufnahmegehäuses (3) untergebracht zu sein, wobei der Kochbehälter (4) einen Boden (6) und periphere Wände (7) aufweist, die sich vom Boden (6) erstrecken und zusammen mit dem Boden (6) ein Kochvolumen (8) definieren;
∘ eine Kochplatte (5), die konfiguriert ist, vom Kochbehälter (4) getragen zu werden und die Lebensmittel zu halten;
∘ ein Heißluftheizsystem (11), konfiguriert zum Erhitzen und Kochen der im Aufnahmegehäuse (3) befindlichen Lebensmittel gemäß mindestens einem Heißluftkochmodus; das elektrische Kochgerät (1) umfasst ein Positionierungssystem (12), konfiguriert zum Positionieren der Kochplatte (5) in mindestens einer ersten Kochposition, in der die Kochplatte (5) sich in einer ersten Koch-Ebene (P1) erstreckt und sich in einem ersten Abstand vom Boden (6) befindet, und in einer zweiten Kochposition, in der die Kochplatte (5) sich in einer zweiten Koch-Ebene (P2) erstreckt und sich in einem zweiten Abstand vom Boden (6) befindet, der kleiner ist als der erste Abstand, wobei das Positionierungssystem (12) einen Trägerteil (12.1) umfasst, der im Kochbehälter (4) angeordnet ist, und einen Abstützteil, der auf der Kochplatte (5) angeordnet ist und konfiguriert ist, vom Trägerteil (12.1) getragen zu werden, wenn die Kochplatte (5) die erste Kochposition einnimmt,
der Trägerteil (12.1) umfasst Trägermember (14), die am Kochbehälter (4) vorgesehen sind und konfiguriert sind, mit dem am Abstützteil angeordneten Teil auf der Kochplatte (5) zusammenzuarbeiten und ihn zu tragen, wenn die Kochplatte (5) die erste Kochposition einnimmt,
der Abstützteil, der auf der Kochplatte (5) angeordnet ist, ist konfiguriert, auf einer unteren Stützfläche (9) zu ruhen, die auf dem Kochbehälter (4) vorgesehen ist, wenn sich die Kochplatte (5) in der zweiten Kochposition befindet, wobei die genannte untere Stützfläche (9) teilweise das Positionierungssystem (12) bildet,
**dadurch gekennzeichnet, dass** das Positionierungssystem (12) Positionierungsvertiefungen (18) umfasst, die auf der Kochplatte (5) vorgesehen sind, wobei das Positionierungssystem (12) so konfiguriert ist, dass es eine Verschiebung der Kochplatte (5) in die zweite Kochposition ermöglicht, wenn jedes Trägermember (14) gegenüber einer entsprechenden Positionierungsvertiefung (18) liegt.

2. Kochgerät nach Anspruch 1, wobei die Kochplatte (5) konfiguriert ist, relativ zum Kochbehälter (4), in eine erste relative Ausrichtung, wenn die Kochplatte (5) die erste Kochposition einnimmt, und relativ zum Kochbehälter (4) in eine zweite Ausrichtung, wenn die Kochplatte (5) die zweite Kochposition einnimmt, zu orientieren, wobei die erste Ausrichtung sich von der zweiten Ausrichtung unterscheidet.

3. Kochgerät nach Anspruch 1 oder Anspruch 2, wobei die Kochplatte (5) und der Abstützteil einteilig sind.

4. Kochgerät nach einem der Ansprüche 1 bis 3, wobei die erste Koch-Ebene (P1) und die zweite Koch-Ebene (P2) im Wesentlichen parallel sind und konfiguriert sind, sich im Wesentlichen horizontal zu erstrecken, wenn das Gehäuse (2) auf einer horizontalen Fläche ruht.

5. Kochgerät nach einem der Ansprüche 1 bis 4, wobei der Kochbehälter (4) eine Zugangsoffnung aufweist, die durch einen oberen Rand (13) des Kochbehälters (4) begrenzt ist, wobei die Zugangsoffnung so konfiguriert ist, dass sie das Platzieren und Entfernen der Kochplatte (5) in und aus dem Kochvolumen (8) ermöglicht.

6. Kochgerät nach einem der Ansprüche 1 bis 5, wobei die Kochplatte (5) eine Unterseite aufweist, die konfiguriert ist, zum Boden (6) hin orientiert zu sein, und eine Oberseite, auf der Lebensmittel zum Kochen platziert werden sollen, wobei die Trägermember (14) so konfiguriert sind, mit einem Randbereich (15) der Unterseite der Kochplatte (5) zusammenzuarbeiten, wenn die Kochplatte (5) die erste Kochposition einnimmt, wobei der genannte Randbereich (15) den Abstützteil bildet.

7. Kochgerät nach einem der Ansprüche 1 bis 6, wobei jedes Trägermember (14) so konfiguriert ist, in das Kochvolumen (8) hinein vorzustehen.

8. Kochgerät nach einem der Ansprüche 1 bis 7, wobei die Trägermember (14) mindestens an zwei der peripheren Wände (7) des Kochbehälters (4) vorgesehen sind.

9. Kochgerät nach einem der Ansprüche 1 bis 8, wobei die Positionierungsvertiefungen (18) asymmetrisch in Bezug auf eine Mittelebene der Kochplatte (5) sind, die senkrecht zu einer Ausdehnungsebene der Kochplatte (5) ist.

10. Kochgerät nach einem der Ansprüche 1 bis 9, wobei jedes Trägermember (14) zwei im Wesentlichen parallele seitliche Führungsbereiche (17) umfasst, die konfiguriert sind, um die Indexierung und Führung der Kochplatte (5) während der Bewegung in die zweite Kochposition zu ermöglichen.

11. Kochgerät nach einem der Ansprüche 1 bis 10, wobei die Kochplatte (5) perforiert ist, sodass die Garsäfte, die von auf der Kochplatte (5) platzierten Lebensmitteln erzeugt werden, durch Gravitation in einen unteren Bereich (10) des Kochbehälters (4) abfließen können.

12. Verfahren zur Verwendung eines elektrischen Kochgeräts (1) nach einem der Ansprüche 1 bis 11, wobei das Verfahren einen Schritt umfasst, in dem die Kochplatte (5) von der ersten Kochposition zur zweiten Kochposition bewegt wird, was mindestens die folgenden Schritte umfasst:
∘ Anheben der Kochplatte (5) aus der ersten Kochposition und aus der Entfernung der Trägermember (14),
∘ Drehen der Kochplatte (5) um eine Drehachse, die im Wesentlichen senkrecht zur ersten Koch-Ebene (P1) ist, um die Positionierungsvertiefungen (18) gegenüber den Trägermembern (14) zu positionieren,
∘ Bewegen der Kochplatte (5) in Richtung des Bodens (6) bis zur Erreichung der zweiten Kochposition.

## Claims

1. An electric cooking appliance (1) configured for cooking food, comprising:
∘ a housing (2) comprising a receiving housing (3);
∘ a cooking container (4) configured to be at least partially housed inside the receiving housing (3), the cooking container (4) having a container bottom (6) and peripheral walls (7) extending from the container bottom (6) and defining with the container bottom (6) a cooking volume (8);
∘ a cooking plate (5) configured to be supported by the cooking container (4) and to support the food to be cooked;
∘ a hot air heating system (11) configured to heat and cook the food present inside the receiving housing (3) according to at least one hot air cooking mode;
the electric cooking appliance (1) comprising a positioning system (12) configured to position the cooking plate (5) in at least a first cooking position wherein the cooking plate (5) extends in a first cooking plane (P1) and is positioned at a first distance from the container bottom (6), and in a second cooking position where the cooking plate (5) extends in a second cooking plane (P2) and is positioned at a second distance from the container bottom (6) which is less than the first distance, the positioning system (12) comprising a support part (12.1) disposed in the cooking container (4) and a resting part disposed on the cooking plate (5) and configured to be supported by the support part (12.1) when the cooking plate (5) occupies the first cooking position,
the support part (12.1) including support members (14) provided on the cooking container (4) and configured to cooperate with and support the resting part disposed on the cooking plate (5) when the cooking plate (5) occupies the first cooking position,
the resting part, disposed on the cooking plate (5), being configured to rest on a lower support surface (9) provided on the cooking container (4) when the cooking plate (5) is in the second cooking position, said lower support surface (9) partly forming the positioning system (12),
**characterized in that** the positioning system (12) includes positioning recesses (18) provided on the cooking plate (5), the positioning system (12) being configured to allow displacement of the cooking plate (5) in the second cooking position when each support member (14) is located opposite a respective positioning recess (18).

2. The cooking appliance according to claim 1, wherein the cooking plate (5) is configured to be oriented, relative to the cooking container (4), in a first relative orientation when the cooking plate (5) occupies the first cooking position, and to be oriented, relative to the cooking container (4), in a second orientation when the cooking plate (5) occupies the second cooking position, the first orientation being different from the second orientation.

3. The cooking appliance according to claim 1 or claim 2, wherein the cooking plate (5) and the resting part are monobloc.

4. The cooking appliance according to any one of claims 1 to 3, wherein the first cooking plane (P1) and the second cooking plane (P2) are substantially parallel and are configured to extend substantially horizontally when the housing (2) rests on a horizontal surface.

5. The cooking appliance according to any one of claims 1 to 4, wherein the cooking container (4) includes an access opening defined by a upper peripheral rim (13) of the cooking container (4), the access opening being configured to allow placement and removal of the cooking plate (5) into and out of the cooking volume (8).

6. The cooking appliance according to any one of claims 1 to 5, wherein the cooking plate (5) comprises a lower face configured to be oriented towards the container bottom (6) and an upper face on which food to be cooked is intended to be placed, the support members (14) being configured to cooperate with a peripheral portion (15) of the lower face of the cooking plate (5) when the cooking plate (5) occupies the first cooking position, said peripheral portion (15) forming the resting part.

7. The cooking appliance according to any one of claims 1 to 6, wherein each support member (14) is configured to protrude inside the cooking volume (8).

8. The cooking appliance according to any one of claims 1 to 7, wherein the support members (14) are provided on at least two of the peripheral walls (7) of the cooking container (4).

9. The cooking appliance according to any one of claims 1 to 8, wherein the positioning recesses (18) are asymmetrical in relation to a median plane of the cooking plate (5) which is perpendicular to an extension plane of the cooking plate (5).

10. The cooking appliance according to any one of claims 1 to 9, wherein each support member (14) comprises two substantially parallel lateral guiding portions (17) configured to allow indexing and guiding of the cooking plate (5) during its movement to the second cooking position.

11. The cooking appliance according to any one of claims 1 to 10, wherein the cooking plate (5) is perforated, so that cooking juices produced by food placed on the cooking plate (5) can flow by gravity into a lower portion (10) of the cooking container (4).

12. A method of using an electric cooking appliance (1) according to any one of claims 1 to 11, the method comprising a step of moving the cooking plate (5) from the first cooking position to the second cooking position which includes at least the following steps:
∘ lifting the cooking plate (5) from the first cooking position and away from the support members (14),
∘ pivoting the cooking plate (5) around a pivoting axis that is substantially perpendicular to the first cooking plane (P1), in order to position the positioning recesses (18) opposite the support members (14),
∘ moving the cooking plate (5) towards the container bottom (6) until reaching the second cooking position.
